# EUROPEAN PATENT APPLICATION

(11) **EP 4 030 048 A1**
(43) Date of publication of application: **20.07.2022**
(21) Application number: 21382017.8
(22) Date of filing: 13.01.2021
(51) Int. Cl.: F02K 9/97, F02K 9/64, F02K 9/76

(54) **AEROSPIKE ENGINES, LAUNCH VEHICLES INCORPORATING SUCH ENGINES AND METHODS**

(71) Applicant: Pangea Aerospace, S.L., 08018 Barcelona (ES)
(72) Inventor: ROSSI, Federico, 8037 Barcelona (ES); ARGEMÍ SAMSÓ, Adrià, 08037 Barcelona (ES); PALUMBO, Nicola, 08037 Barcelona (ES); BERGSTRÖM, Rasmus, 08037 Barcelona (ES)
(74) Representative: de Rooij, Mathieu Julien

(57) **Abstract**

An aerospike engine configured to be connected to a liquid methane tank, and to a liquid oxygen tank is provided. The aerospike engine comprises a centerbody including an aerospike nozzle, an external skirt, and a combustion chamber being defined between the external skirt and the centerbody. The centerbody is additively manufactured from one or more copper alloys and has a plurality of centerbody internal cooling channels. The external skirt is additively manufactured from one or more copper alloys and has a plurality of skirt internal cooling channels. The aerospike engine is configured to supply liquid methane and liquid oxygen through the internal cooling channels to the combustion chamber. Also disclosed are stages of a launch vehicle and a launch vehicle comprising such an aerospike engine, as well as methods for re-entry for a re-usable stage of a launch vehicle comprising an aerospike engine.

## Description

The present disclosure relates to reusable rocket engines, and particularly relates to a stage of launch vehicles, e.g. a first stage of a launch vehicle having a reusable rocket engine that can return to land on earth. The present disclosure further particularly relates to reusable aerospike engines. The present disclosure also relates to systems and methods for cooling and manufacturing aerospike engines.

### BACKGROUND

Launch vehicles to transport satellites or other payload to orbit, i.e. carrier rockets, have traditionally been made for a single mission. They are used only once and destroyed or abandoned during the flight.

The first reusable launch vehicle to reach orbit was the Space Shuttle. The Space Shuttle ultimately failed to accomplish the intended goal of reducing launch costs to below those of single-use launch vehicles. The Space Shuttle program was definitively abandoned in 2011.

More recently, attempts have been made to reduce the cost of launching a payload and this has led to reusable launch systems, in which part of the launch vehicle is recovered and reused for another flight. Possibly, the most well-known example of a re-usable first stage of a launch vehicle is being developed commercially by the company SpaceX^{™}. Falcon 9 is a two-stage rocket designed and manufactured by SpaceX^{™} for the transport of satellites into orbit.

Even though Falcon 9 has been used successfully, the maneuvering required for reentry and landing is very complex and technologically very challenging. This leads to a high development cost.

The present disclosure provides examples of systems and methods that at least partially resolve some of the aforementioned disadvantages.

The aerospike engine is a type of rocket engine that maintains its aerodynamic efficiency across a wide range of altitudes, contrary to the well known bell nozzle design. It belongs to the class of altitude compensating nozzle engines. A vehicle with an aerospike engine can use significantly less propellant than other rocket engine designs.

Several versions of the aerospike design exist, differentiated by their shapes. In the toroidal aerospike the spike is bowl-shaped with the exhaust exiting in a ring around the outer rim. In theory this requires an infinitely long spike for best efficiency, but by blowing a small amount of gas out of the center of a shorter truncated spike a good performance can be achieved. The gas is typically an exhaust gas from a turbopump.

In the linear aerospike, the spike consists of a tapered wedge-shaped plate, with exhaust exiting on either side at the "thick" end. This design has the advantage of being stackable, allowing several smaller engines to be placed in a row to make one larger engine while augmenting steering performance with the use of individual engine throttle control.

The present disclosure in various examples provides improvements in aerospike engines.

### SUMMARY

In a first aspect, an aerospike engine is provided which is configured to be connected to a liquid methane tank, and to a liquid oxygen tank, and comprises a centerbody including an aerospike nozzle, an external skirt, wherein a combustion chamber being defined between the external skirt and the centerbody. The centerbody is additively manufactured from one or more copper alloys and has a plurality of centerbody internal cooling channels, and the external skirt is additively manufactured from one or more copper alloys and has a plurality of skirt internal cooling channels. The aerospike engine is configured to supply liquid methane delivered from the liquid methane tank and liquid oxygen delivered from the liquid oxygen tank through the internal cooling channels to the combustion chamber.

In accordance with this aspect, an aerospike engine is provided which is particularly designed for use in re-usable launch vehicle. Copper alloys have a high thermal conductivity, thus avoiding thermal gradients and accompanying deformation e.g. warping and local plasticity, which is important for re-usable launch vehicles. Thermal behavior and control in the aerospike engine can be controlled by regenerative cooling. This might lead to coking, but the combination of copper alloy and liquid oxygen and methane has been found to avoid or largely reduce cooking, thereby improving re-usability. Since both propellants may be supplied through the cooling channels, the propellants do not reach as high a temperature as when only one of the propellants were used in regenerative cooling.

By using additive manufacturing (i.e. 3D printing) for the manufacture of the aerospike engine, cooling channels with complex geometries may be provided in the aerospike design. Optimized cooling is thus made possible. Also, additive manufacturing reduces the part count, and possible failure modes of the engine. In combination, a rocket engine is provided which can significantly reduce overall operational cost, through reduced propellant use and re-usability.

A liquid methane pump may be operatively coupled with an expansion turbine configured for expansion of heated up methane. A liquid oxygen pump may be operatively coupled with an expansion turbine configured for expansion of heated up oxygen.

In some examples, one of the liquid methane and liquid oxygen may be used for cooling the centerbody, and the other of the liquid methane and liquid oxygen may be used for cooling the external skirt. Cooling cycles of the centerbody and skirt may be completely independent.

In some examples, one or more of the cooling channels have a non-constant cross-section. In further examples, one or more of the cooling channels have a non-constant surface roughness. Optionally, a portion of a wall of the external skirt and/or a portion of a wall of the centerbody forming the combustion chamber is unpolished after manufacturing. Leaving the internal cooling channels unpolished means that an increased heat transfer may take place. Increased heat transfer to the coolant (propellant) may increase efficiency in an expander which may drive the pump for pumping propellant. Varying cross-sections for cooling channels as well as varying roughness can tailor the cooling for specific portions of engine body, and they can be easily incorporated using additive manufacturing.

In a further aspect, an aerospike engine is provided configured to be connected to a first liquid propellant tank, and to a second liquid propellant tank, and having a centerbody including a truncated aerospike nozzle. A bottom of the truncated aerospike nozzle defines a baseplate. The aerospike engine comprises an external skirt, and a combustion chamber being defined between the external skirt and the centerbody. The aerospike engine is configured to supply liquid propellants from the tanks through the cooling channels to the combustion chamber, wherein the aerospike engine is further configured to supply liquid propellant to an exit at the baseplate.

The baseplate creates a recirculating region of hot gases, during operation, that generate thermal stresses on the material, as well as a base suction force that reduces the thrust of the engine. Instead of discharging turbo-pump exhaust gases into this area, in accordance with this aspect, by spilling some propellant and injecting it directly into the base region, pressure is built up, while at the same time the area is cooled.

The propellant circulating in this region may be at cryogenic temperature (e.g. around 110 ºK) and at high pressure (e.g. at around 80 bar). Spilling propellant from the main lines generates a loss of specific impulse, but this may be compensated by the thrust recovery due to pressure build-up in the base region.

In some examples, the liquid propellants may be liquid oxygen and liquid methane. In some examples, liquid oxygen may be ejected.

In a further aspect, a reusable stage for a space launch vehicle is provided including an aerospike engine according to any of these aforementioned aspects. A stage of a launch vehicle as used herein may be understood as a part of a launch vehicle that is configured to be separated from further parts of the launch vehicle and has an independent propulsion system. Launch vehicle stages may be in tandem arrangement or parallel arrangement.

In some examples, the aerospike engine may be configured for roll and attitude control. In other examples, the aerospike engine may be configured for thrusting the space launch vehicle.

In yet a further aspect, a launch vehicle comprising such a reusable stage may be provided. In particular, the first stage may be a reusable stage.

In yet a further aspect, a method for re-entry for a re-usable stage of a launch vehicle comprising an aerospike engine is provided. The aerospike engine has a centerbody including an aerospike nozzle and an external skirt, wherein the centerbody comprises cooling channels. And the method comprises providing a flow of liquid propellant through the cooling channels of the centerbody to cool the centerbody during re-entry.

In accordance with this aspect, a method is provided for active cooling of the baseplate area and of the aerospike engine e.g. during atmospheric re-entry. A reusable stage of a launch vehicle may perform a tail-first re-entry. The heat flux generated by the atmospheric impact may be too high for the material (copper) to withstand, and thus a cooling system may be required. Providing a relatively small amount of propellant inside the regenerative cooling system will cool down the base region and can provide a small pressure build-up.

In some examples, the liquid propellant may be liquid oxygen or liquid methane.

In some examples, providing the flow of liquid propellant through the cooling channels includes pumping the liquid propellant through the cooling channels. Optionally, one or more batteries may power one or more pumps for pumping the liquid propellant.

In accordance with yet a further aspect, a further method for re-entry using a re-usable stage of a launch vehicle comprising an aerospike engine is provided. The method comprises providing a combined flowrate of first and second liquid propellants through cooling channels of the aerospike engine, the combined flowrate of the two liquid propellants having a theoretical thrust level in operation of the aerospike engine. The method further comprises operating the aerospike engine for producing thrust during re-entry, wherein the thrust produced by the aerospike engine is lower than the theoretical thrust level.

In accordance with this aspect, a flowrate of liquid propellants is provided that provides comparatively more cooling than thrust. During re-entry, in order to slow down, a thrust may be needed. This thrust will be much lower than the thrust needed for take-off, because stages of the launch vehicle may have been separated and because less propellant will be carried. An aspect of using an aerospike engine is that the exhaust flow will adapt to prevailing ambient conditions, thus avoiding problems related to having a low pressure when operating at reduced thrust in e.g. a bell nozzle.

A problem might occur at reduced flowrates of propellants used for cooling. The flowrate of propellants is to be reduced for the relatively small amount of thrust needed, but if the propellant is used for cooling, insufficient cooling may be provided. In accordance with this aspect, liquid propellants are provided art a flowrate that is sufficient for cooling, whereas the aerospike engine does not take full advantage of the propellant flowrate.

The method may comprise providing a first flow of the first liquid propellant through cooling channels of the aerospike engine at a first flowrate and providing a second flow of the second liquid propellant through other cooling channels of the aerospike engine at a second flowrate. In some examples, a part of the first flow of the first liquid propellant and/or a part of the second flow of the second liquid propellant is not supplied to the combustion chamber after flowing through the cooling channels. That is, the liquid propellants may be used for cooling of different parts of the aerospike engine, but the heated up propellant is subsequently not provided to the combustion chamber.

In some examples, a mixture of the first liquid propellant and the second liquid propellant in the combustion chamber during re-entry may not be optimum. An ideal mixture ratio may be provided in the combustion chamber of the aerospike engine during initial take-off and flight. During re-entry instead, the mixture ratio may be varied, such that propellants may be used effectively for cooling, but the thrust is reduced as compared to the theoretical capability. Both diverting of propellant and varying the mixture of propellants may be used in combination as well.

The examples of the method of this aspect may be combined with all other aspects and embodiments explained herein.

### BRIEF DESCRIPTION OF THE DRAWINGS

Non-limiting examples of the present disclosure will be described in the following, with reference to the appended drawings, in which:
Figures 1A - 1D schematically illustrate different views of an example of a first stage for a space launch vehicle and of a space launch vehicle;
Figure 2 schematically illustrates an example of a method for transporting a payload to space;
Figures 3A - 3C schematically illustrate an example of an aerospike engine;
Figure 4 schematically illustrates an example of a method of operating an aerospike engine; and
Figure 5 schematically illustrates an example of a cooling method of an aerospike engine.

### DETAILED DESCRIPTION OF EXAMPLES

In these figures the same reference signs have been used to designate the same elements.

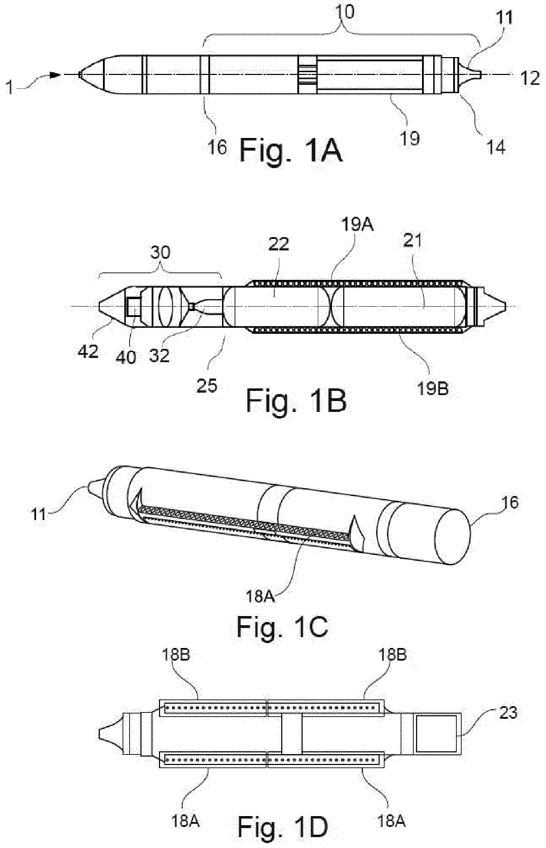

Figures 1A - 1D schematically illustrate different views of an example of a first stage for a space launch vehicle and of a space launch vehicle. The space launch vehicle according to this example may have a weight of around 20 tons and may be capable of transporting a payload of approximately 150 kg. A launch vehicle 1 according to this example comprises a first stage 10 and a second stage 30. The first stage 10 has a first end 14 and a second end 16, and a central longitudinal axis 12 and in this example forms a reusable stage of the space launch vehicle.

At or near the first end 14, a first stage rocket engine 11 is provided. In this specific example, an aerospike engine, and particularly an aerospike engine with a toroidal combustion chamber is provided. An aspect of using an aerospike engine is that the engine can maintain its aerodynamic efficiency across a wide range of altitudes. However, in other examples, different rocket engines may be used.

The first stage rocket engine may have swiveling capability with respect to the first stage or other forms of thrust vector control to steer the vehicle.

Figure 1B schematically illustrates a cross-sectional view of space launch vehicle 1. The reusable first stage 10 in this example has a tank 21 for liquid oxygen, and a tank 22 for a liquid propellant. The liquid propellant may be liquid methane in some examples. In alternative examples, the liquid propellant may be kerosene, hydrogen or otherwise.

The second stage 30 in this example includes payload 40 and a payload fairing 42. The payload may be a small satellite. The second stage 30 also includes a second stage rocket engine 32. In this particular example, the second stage rocket engine includes a bell nozzle and may be powered by oxygen and methane.

In further examples, different propellants and rocket engines may be used for the first stage and for the second stage.

The first stage 10 and second stage 30 may be separable at interstage 25. It should be clear that different shapes and arrangements may be foreseen for the stages and interstages. In one alternative example, the first stage may have a rounded nose. Such a rounded nose can make the first stage more suitable for lifting body re-entry. At launch, such a rounded nose may be hidden from sight in the interstage 25. This is merely one possible example.

The first stage 10 in this example includes rows 18A and 18B of a plurality of electric ducted fans 18 arranged side by side. In Figure 1A, the fans 18 are covered by fan covers 19A and 19B. In figure 1C, the fan covers have been detached from the cylindrical main body of the first stage. In a specific example, the fan covers may be attached using a plurality of pyrotechnic fasteners, e.g. bolts. After re-entry and in preparation of the landing procedure, explosives in the bolts may be remotely detonated such that the covers are detached from the main body and the ducted fans are uncovered.

In this specific example, a first row 18A and a second row 18B of electric ducted fans are arranged parallel to the longitudinal axis and in diametrically opposite positions of the main cylindrical body.

The number of ducted fans may be adapted depending on e.g. the weight of the reusable stage of the launch vehicle, and the power of the fans. In a launch vehicle according to figure 1, the weight of the reusable stage during the landing procedure may e.g. be in a range of 1.500 - 2.500 kg. The first stage may include e.g. 60 - 80 ducted fans. The nominal thrust of the fans may be e.g. in the range of 200 to 400 N. In other examples, the first stage may include e.g. a lower number of fans, each with a higher nominal thrust.

Although not illustrated in this specific example, in other examples a least some of the ducted fans can comprise air flow intake guides. The intake guides can be designed to redirect intake air to flow e.g. over the main body or to inhale air from a specific direction.

And although also not illustrated in this specific example, in other example, at least some of the ducted fans have air flow outlet guides. The outlet guides can redirect the outlet air and exhale air in a specific direction or to shield the outlet from incoming air. In an example, the exhaust may be directed such that a horizontal thrust component may be provided.

In further examples, not all ducted fans need to be the same size and the same rated performance. In some examples, ducted fans further away from the center of gravity may be smaller and may be predominantly used for steering.

Figure 1D illustrates how the first row 18A and second row 18B may be divided into four quadrants 18A1, 18A2, 18B1 and 18B2 with respect to the center of gravity at the time of the landing procedure. Individual control over the four quadrants allow the plurality of fans to be driven like a quadcopter. A quadcopter configuration is used in many unmanned aerial vehicle designs for its control and flight characteristics.

The electric ducted fans may be powered by one or more batteries. The batteries in this example may be arranged near the second end 16 of the first stage, i.e. at the opposite end of the first stage rocket engine 11. In the landing procedure, the propellants have been exhausted and the rocket engine provides a mass that is far removed from the geometrical center of the first stage. So that the center of gravity may be arranged relatively close to the geometrical center of the first stage, the batteries may be arranged at the opposite end.

The electric fans or electric ducted fans may additionally or alternatively be powered by an electric generator, which in turn could be powered by e.g. a gas turbine. Such an electric generator might reduce the overall weight of the stage and the launch vehicle.

The exhaust velocity of the air flow through the ducted fans should be high enough to avoid the exhaust air from re-entering the ducted fans when the speed of falling is higher than the exhaust velocity from the ducted fans. The exhaust velocity of the air through the ducted fans may be e.g. 70 m/s or more, and specifically 85 m/s or more.

The ducted fans in some examples may have some swiveling capability. Control capabilities of the reusable stage may be improved by swiveling ducted fans. In further examples, the fans have no swiveling capability in order to increase reliability and reduce weight. In these examples, the ducted fans may be arranged or aligned along fan axes that are not exactly perpendicular to the central longitudinal axis 12. In particular, with reference to figure 1D, groups of fans 18B1 and 18B2 may have a different fan axis than groups 18A2 and 18A1.

When seen from the front of the launch vehicle (e.g. figure 1E), the fan rotational axes (and thus the axes of thrust) may be inclined towards the center of the launch vehicle. The deviation from the vertical may be e.g. between 2 and 20º, and particularly may be between 4º and 15º. Figure 1E schematically illustrates the potential thrust from the ducted fans.

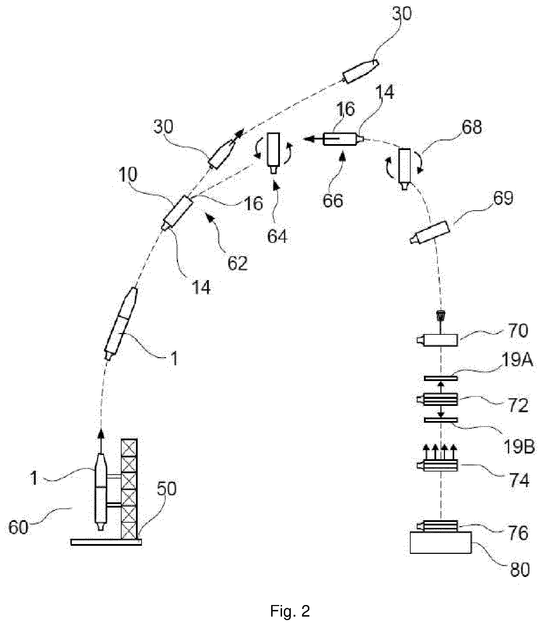

Figure 2 schematically illustrates an example of a method for transporting a payload to space. The space launch vehicle 1 is arranged substantially vertically for take-off 60 at take-off platform 50. The first stage rocket engine is arranged at the bottom of the space launch vehicle and is ignited to propel the space launch vehicle substantially vertically at take-off.

The trajectory of the space launch vehicle may be slightly steeper than for most expendable launch vehicles. At step 62, the first stage 10 may be separated from the second stage 30. The separation may occur e.g. at a height of 50 - 150km, e.g. about 70 km above the earth's surface depending on the mission. The second stage 30 in this example may carry the payload, and a second stage rocket engine. The second stage rocket engine may be powered to bring the payload to its intended orbit. In this specific example, the second stage 30 is shown to have a bell shaped exhaust nozzle. After separation, depending on the mission, the first stage continues an upwards flight to e.g. about 200 km above the earth's surface.

In some examples, an additional payload may be carried in the first stage of the vehicle. In one example, such an additional payload which is returned to earth might relate to micro-gravity experiments.

In examples, the propellants of the first stage may not be exhausted before separation from the second stage. After separation, the first stage of the space launch vehicle may maneuver to flip and thereby change its orientation at step 64. To this end, the rocket engine 10 might be powered and thrust vector control may be used. Alternatively or additionally, smaller auxiliary thrusters and/or reaction wheels might be used for the flip maneuver.

Both small thrusters and control surfaces may be used in other stages of the mission as well.

After this maneuver at step 64, the first stage rocket engine may be ignited for a boost back maneuver at step 66. Depending on the flight mission and the position of landing pad 80, the boost back maneuver may substantially cancel out the horizontal speed of the first stage, to only partially cancel the horizontal speed of the first stage or to change flight direction of the first stage.

In this specific example, at step 68, a further flip maneuver may be performed. The stage 10 may have a substantially horizontal orientation after the second flip maneuver. It should be noted that the directions of the flip maneuver indicated in the drawings are not intended to be limiting. In any of the flip maneuver, the direction may be clockwise or counter-clockwise, or out-of-plane or otherwise.

Re-entry into the earth's atmosphere may occur at step 69. The first stage may fly in a substantially horizontal orientation, i.e. the central longitudinal axis 12 of the first stage may be substantially horizontal or define an angle of less than 30º, and particularly less than 20º with respect to the horizontal.

Control surfaces, e.g. grid fins, deltafins, or planar fins may be used for flight control and stability.

After re-entry, at step 70, optionally a passive decelerator may be activated or deployed to slow down the vertical speed of stage 10. The passive decelerator may be textile based such as a parachute or parafoil. The passive decelerator might also be a ballute.

At step 72, the fan covers 19A and 19B may be removed to uncover the ducted fans. Optionally, the ducted fans may be configured to be operated as a generator. I.e. as the stage 10 of the launch vehicle is falling, the fans may be rotated by the air passing through the fans, and this rotation may be used to charge the batteries.

Then the ducted fans may be activated at step 74. It is possible to use the decelerator at the same time as the ducted fans. In this configuration, the lift force required for the stage of the launch vehicle may be partly provided by a decelerator and by the ducted fans.

Control over individual fans, and/or over groups of fans may be used to control the flight of the first stage 10 to land at step 76. The first stage 10 may land in a substantially horizontal configuration at landing pad 80. The landing pad 80 may be land based or seaborne and may be fixed or movable.

For a softer landing, the first stage may include some form of shock absorber or landing gear. Alternatively, one or more shock absorbers may be integrated in the landing platform 80. This way the weight of the space launch vehicle may be smaller and the design of the launch vehicle may be simplified. The landing platform 80 might also be a net or similar that is configured to absorb some of the remaining speed of the first stage of the space launch vehicle.

In alternative examples, a different landing sequence may be carried out. In an example, a method for transporting a payload to space may substantially correspond to the examples hereinbefore described, but at stage 76, instead of landing on a platform or landing pad, the stage with return to base capability may be caught midair instead of landing. I.e. a helicopter, drone or other aircraft may catch the stage and then land. Alternatively, the stage 76 may be caught by a hook or arm during the final phase of landing.

Even though in the disclosed examples, the fans were shown to be ducted fans, in other examples, propellers, propfans, turboprops or turbofans might be used.

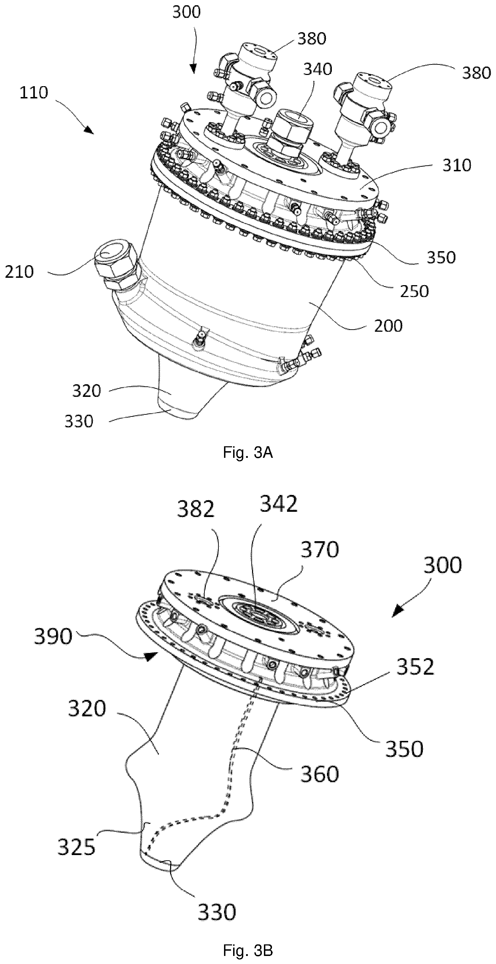

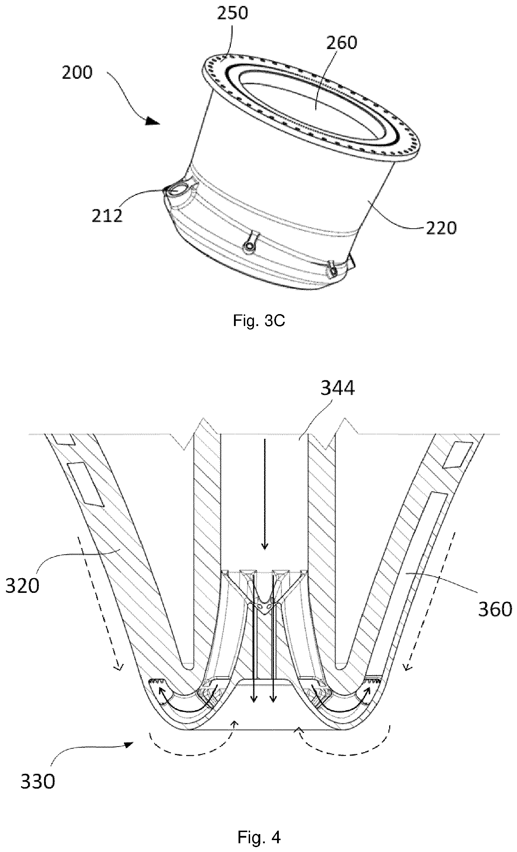

Figures 3A - 3C schematically illustrate an example of an aerospike engine. Figure 3A illustrates a view of an aerospike engine including an assembly of a centerbody and external skirt. Figure 3B illustrates the centerbody of the example of figure 3A and figure 3C illustrates the external skirt of the example of figure 3A.

Figure 3A illustrates an aerospike engine 110 configured to be connected to a liquid methane tank, and to a liquid oxygen tank. The aerospike engine comprises a centerbody 300 including an aerospike nozzle, an external skirt 200, and a combustion chamber 390 being defined between the external skirt 200 and the centerbody 300. The centerbody 300 is additively manufactured from one or more copper alloys and has a plurality of centerbody internal cooling channels 360. The external skirt 200 is also additively manufactured from one or more copper alloys and has a plurality of skirt internal cooling channels. The aerospike engine 110 is configured to supply liquid methane delivered from the liquid methane tank and liquid oxygen delivered from the liquid oxygen tank through the internal cooling channels to the combustion chamber.

In the example of figure 3, an injector plate 370 may be integrally formed with centerbody 300. In an alternative example, the injector plate may be separately manufactured, e.g. also through additive manufacturing.

The injector plate 370 may have a plurality of injection tubes including methane injection tubes and oxygen injection tubes, wherein the injection tubes are configured such that injected methane and injected oxygen impinge against each other. The oxygen and the methane are heated up when cooling the engine body. The heated up gas-like methane and oxygen may arrive at the injection tubes of the combustion chamber with substantially the same density. Mixing in the combustion chamber can be more efficient.

The aerospike engine 110 may further comprise a liquid methane pump operatively coupled with an expansion turbine configured for expansion of heated up methane. The aerospike engine may further comprise a liquid oxygen pump operatively coupled with an expansion turbine configured for expansion of heated up oxygen.

One of the liquid methane and liquid oxygen may be used for cooling the centerbody, and the other of the liquid methane and liquid oxygen may be used for cooling the external skirt. In the example of figure 3, the centerbody 300 may include a liquid oxygen supply at 340. The centerbody 300 may be cooled by supplying liquid oxygen through cooling channels 360 formed in an inside of a wall of plug 320. By separating the propellant supplies, and coolant supplies, independent cooling cycles are provided.

The liquid propellant may be pumped with a variable flow rate in accordance with needs. The flow rate and the amount of cooling may be independently controlled.

Also by using two liquid propellants for cooling (instead of one), the temperature reached by each of the propellants does not need to be very high. E.g. in an example, the methane and oxygen may reach a temperature (after cooling the respective parts of the aerospike engine) of e.g. 250 - 300 K. Coking and oxidation may thus be reduced or avoided. Oxidation by oxygen of surrounding materials may occur at 320K or more, and methane may undergo coking at about 650K.

The centerbody in this example integrates injector plate 370, and plug 320. Plug 320 may include a truncated cone 325 ending at a distal end at a baseplate 330. The centerbody in this example further includes a flange 350 for connecting to a flange of the external skirt 200. The flanges may be connected to each other with any suitable fastener. In the illustrated example, flange 350 comprises a plurality of holes for bolts.

The injector plate 370 may further comprise fittings 382 for fitting an igniter 380 (shown in figure 3A), and a fitting for receiving a liquid oxygen supply.

Although only a single cooling channel 360 has been schematically illustrated in figure 3B, it will be clear that there may be a plurality of cooling channels. One or more of the cooling channels may have a non-constant cross-section. One or more of the cooling channels may have a non-constant surface roughness. By varying the roughness, and cross-section tailored cooling can be provided at different parts of the aerospike engine. Additive manufacturing is particularly suitable for tailoring the cooling channels.

Another example of varying roughness is that after manufacturing, a portion of a wall of the external skirt and/or a portion of a wall of the centerbody forming the combustion chamber may be unpolished.

In some examples, a single copper alloy may be used for manufacturing the external skirt and the centerbody. In other examples, different copper alloys may be used for different parts of the aerospike engine, or different portions thereof.

In the example of figure 3, the aerospike engine is a toroidal aerospike engine. The combustion chamber 390 in the example may be a single toroidal combustion chamber. In other examples, the aerospike engine may be a linear aerospike engine. In some examples, further explained with reference to figure 4, the centerbody may comprise one or more channels for ejecting oxygen from a baseplate of the centerbody. Part of the liquid oxygen may be bled from the supply of oxygen towards the cooling channels.

The external skirt 200 is further illustrated in figure 3C. An outer wall may include a plurality of cooling channels. Liquid methane may be supplied from a liquid methane tank to inlet 212. The methane supply may be divided over a plurality of cooling channels in the outer wall 220. The methane may thus provide cooling for the external skirt. The heated up methane may drive an expander: The expander may be operatively coupled with a pump which is used for pumping the liquid methane from a tank towards the engine. Similarly, the heated up oxygen may drive an expander, which may be operatively coupled with a pump for pumping the liquid oxygen from a tank to the engine.

The external skirt 200 may include a flange 250 which may be coupled to flange 350 of the centerbody. In particular, the flange 250 in this example may include similar holes as flange 350. For assembly, flange 350 may be positioned on top of flange 250. Both flanges may be joined to each other with a plurality of bolts or similar.

A central opening 260 of external skirt 200 may receive the centerbody during this assembly. The combustion chamber may thus be formed between centerbody 300 and external skirt 200.

The aerospike engine of example 3 (and other variants) may be used in a launch vehicle. In some examples, the aerospike engines illustrated herein may be used for steering and attitude control. In other examples, the aerospike engines may be used for thrusting. In particular, the aerospike engines illustrated herein may be used in launch vehicles and stages thereof as illustrated with reference to figures 1 and 2.

In a further aspect, an aerospike engine configured to be connected to a first liquid propellant tank, a second liquid propellant tank is provided. The aerospike engine comprises a centerbody 300 including a truncated aerospike nozzle, a bottom of the truncated aerospike nozzle defining a baseplate 330, an external skirt 200, and a combustion chamber 390 is defined between the external skirt 200 and the centerbody 300. The aerospike engine 110 is configured to supply the first and second liquid propellants from the propellant tanks through the cooling channels to the combustion chamber 390. The aerospike engine is further configured to supply liquid propellant to an exit at the baseplate 330.

This may be further illustrated with reference to figure 4. As in the example of figure 3, the first liquid propellant may be liquid methane and the second liquid propellant may be liquid oxygen.

In the example of figure 4, the liquid oxygen is supplied to an exit at the baseplate 330. Liquid oxygen may be supplied in a central area of the centerbody. A liquid oxygen supply may be divided. A main portion of the liquid oxygen may flow through internal cooling channels 360 of the centerbody. A part of the oxygen supply may be bled towards the baseplate 330. Baseplate 330 may include one or more exits for ejecting oxygen at the baseplate.

Figure 4, in interrupted lines, schematically illustrate on the one hand a hot exhaust flow along the truncated cone. The baseplate may create a recirculating region of hot gases, during operation, that generate thermal stresses on the material, as well as a base suction force that reduces the thrust of the engine. Instead of discharging turbo-pump exhaust gases into this area, in accordance with this aspect, by spilling some propellant and injecting it directly into the base region, pressure is built up, while at the same time the area is cooled.

The propellant circulating in this region may be at cryogenic temperature (e.g. around 110 ºK) and at high pressure (e.g. at around 80 bar). Spilling propellant from the main lines generates a loss of specific impulse, but this may be compensated by the thrust recovery due to pressure build-up in the base region.

In a further aspect, a method for re-entry for a re-usable stage of a launch vehicle comprising an aerospike engine is provided. The aerospike engine has a centerbody including an aerospike nozzle and an external skirt. The centerbody comprises cooling channels, and the method comprises providing a flow of liquid propellant through the cooling channels of the centerbody to cool the centerbody during re-entry. Particularly during re-entry of a re-usable stage of a launch vehicle as described herein, thermal requirements and stresses may be very high.

In examples of this method, one of the liquid propellant may be liquid oxygen, and the other may be liquid methane. The flow of liquid propellant through the cooling channels may include pumping the liquid propellant through the cooling channels, optionally with a variable flow rate.

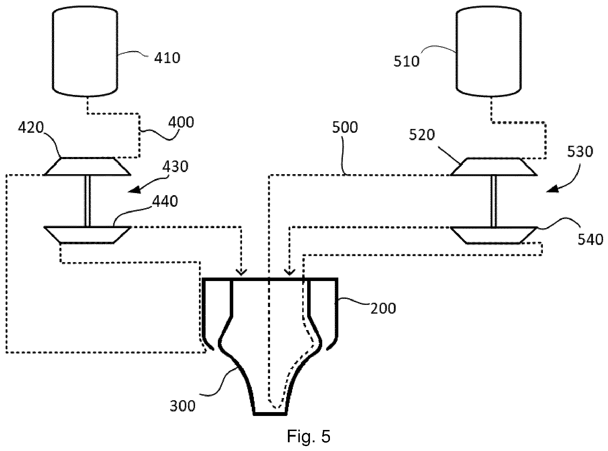

Figure 5 schematically illustrates an example of a cooling method of an aerospike engine. The aerospike engine of this example includes a centerbody 300 and an outer skirt 200. The design and manufacturing methods may be similar or the same as for the aerospike engine if figure 3.

In this example, a flow path 400 indicates a flow of liquid methane from liquid methane tank 410 to turbopump 430. The turbopump 430 comprises a pump 420 and a turbine 440 for driving the pump 420. In operation, in order to cool the aerospike engine, a methane flow path 400 may be established from the tank towards, in this example, cooling channels. The cooling channels may be formed inside the outer skirt, and the outer skirt 200 may be additively manufactured as was explained before.

As is shown in figure 5, liquid methane may be extracted from tank 410 and supplied to cooling channels of the outer skirt 200. As is cools the outer skirt, the methane will heat up, and the gaseous methane will be provided to turbine 440 of turbopump 430. The cooling channel in this example may be arranged from a lower end of the outer skirt towards the top.

The gaseous flow of methane expands in the turbine and drives the turbine. The turbine 440 is operatively coupled to the pump 420 to pump the liquid methane from the tank.

After expanding through the turbine 440, the methane may be supplied to the combustion chamber of the aerospike engine through the injection plate.

Similarly, liquid oxygen may be used to cool the centerbody 300 through a flow path 500. Pump 520 forms part of a turbopump assembly 530, which further comprises turbine 540. Turbine 540 is operatively coupled with pump 520 for driving the pump.

Liquid oxygen may be extracted from tank 510 and flow through the pump towards the centerbody 300. A cooling channel is schematically illustrated which leads, from an upper part of the centerbody down towards the truncated cone and baseplate, and back towards the upper part of the centerbody. In this respect, the cooling channel may be similar to the arrangement illustrated in figure 4.

As the liquid oxygen cools the centerbody, it heats up. The gaseous flow of oxygen may be provided to turbine 540. The gaseous oxygen expands in the turbine 540 and rives the turbine. After expanding in the turbine, the oxygen flow may be supplied to the combustion chamber through the injection plate.

As explained before, both oxygen and methane may be sprayed into the combustion chamber to enhance mixing of the propellants.

It should be appreciated that both propellant flows can be completely independent from each other. The configuration of cooling channels may be adapted to specific needs taking into account the specific propellant used. By separating a cooling flow of one component with one propellant from the cooling flow of another component with another propellant, cooling systems can be tailored to specific needs.

With reference to figure 5, a further aspect of the present disclosure will be illustrated. This aspect of the disclosure may be combined with all other aspects and examples previously described.

A method for re-entry, and particularly a tail-first re-entry, for a re-usable stage of a launch vehicle comprising an aerospike engine is provided herewith as well. After take-off and first stages of flight (see e.g. stages 62 and 64 of flight of figure 2), a significant part of the liquid propellants in tanks 410, 510 may be used up. In examples, a part of liquid propellants may be saved for subsequent maneuvers and particularly for re-entry.

In some examples, re-entry may be a tail-first re-entry. This means that the stage of the launch vehicle may be oriented during re-entry in such a way that the engine part is the front of the vehicle, and re-enters first. In such a tail first re-entry, the rocket engine may be operated to provide thrust to slow down.

In examples of the present disclosure, the method for re-entry may comprise providing a combined flowrate 400, 500 of first and second liquid propellants through cooling channels of the aerospike engine, wherein the combined flowrate of the two liquid propellants have a theoretical thrust level in operation of the aerospike engine. I.e. a corresponding mass flowrate of the liquid propellants in normal operation would be capable of providing a certain level of maximum thrust. In accordance with the method, the aerospike engine is operated for producing thrust during re-entry, wherein the thrust produced by the aerospike engine is lower than the theoretical thrust level.

In the present example of figure 5, providing a combined flowrate of liquid propellants comprises providing a first flow of the first liquid propellant through cooling channels of the aerospike engine at a first flowrate and providing a second flow of the second liquid propellant through other cooling channels of the aerospike engine at a second flowrate. In the example of figure 5, the first liquid propellant may be liquid methane flowing through cooling channels in an outer skirt of the aerospike engine, and the second liquid propellant may be liquid oxygen flowing through cooling channels in a centerbody of the aerospike engine.

As has been explained before, the flowrate of both propellants may be independently controlled. In the present example, in order to provide the independent control, independent turbopumps are provided for the separate cooling flows. In other examples, other pumps or other ways to independently control the flowrates may be provided.

In some examples, in order to reduce the thrust, a part of the first flow 400 of the first liquid propellant is not supplied to the combustion chamber after flowing through the cooling channels. A part of the flow may be diverted after expanding or before expanding in turbine 440.

In some examples, in order to reduce thrust, a part of the second flow 500 of the second liquid propellant is not supplied to the combustion chamber after flowing through the cooling channels. A part of the second flow 500 may be diverted after expanding or before expanding in turbine 540. The part of the second flow 500 of the second liquid propellant may be discarded from the vehicle i.e. vented.

In some examples, a mixture of the first liquid propellant and the second liquid propellant in the combustion chamber is not optimum. In this case, flows 400 and 500 may be supplied in their entirety towards the combustion chamber, but their mixture ratio may not be optimum. In particular, the mixture ratio for re-entry may be different from the mixture ratio during initial stages of flight. Also in this case, a relatively large amount of cooling may be provided for the level of thrust provided.

Both examples i.e. diversion of part of the propellant flow away from the combustion chamber after cooling, and sub-optimum mixing of propellants may also be combined.

It should be clear that this method may be used in aerospike engines according to examples disclosed herein, and in combination with re-usable stages of launch vehicles (including e.g. fans) disclosed herein.

For reasons of completeness, several aspects of the present disclosure are set out in the following numbered clauses:
Clause 1. An aerospike engine configured to be connected to a liquid methane tank, and to a liquid oxygen tank, the aerospike engine comprising:
   a centerbody including an aerospike nozzle,
   an external skirt, and
   a combustion chamber being defined between the external skirt and the centerbody, wherein
   the centerbody is additively manufactured from one or more copper alloys and has a plurality of centerbody internal cooling channels,
   the external skirt is additively manufactured from one or more copper alloys and has a plurality of skirt internal cooling channels, wherein
   the aerospike engine is configured to supply liquid methane delivered from the liquid methane tank and liquid oxygen delivered from the liquid oxygen tank through the internal cooling channels to the combustion chamber.
Clause 2. The aerospike engine of clause 1, comprising an injector plate having a plurality of injection tubes including methane injection tubes and oxygen injection tubes, wherein the injection tubes are configured such that injected methane and injected oxygen impinge against each other.
Clause 3. The aerospike engine of clause 2, wherein the injector plate is integrally formed with the centerbody.
Clause 4. The aerospike engine of any of clauses 1 - 3, further comprising a liquid methane pump operatively coupled with an expansion turbine configured for expansion of heated up methane.
Clause 5. The aerospike engine of any of clauses 1 - 4, further comprising a liquid oxygen pump operatively coupled with an expansion turbine configured for expansion of heated up oxygen.
Clause 6. The aerospike engine according to clause 5, wherein one of the liquid methane and liquid oxygen is used for cooling the centerbody, and the other of the liquid methane and liquid oxygen is used for cooling the external skirt.
Clause 7. The aerospike engine of any of clauses 1 - 6, wherein one or more of the cooling channels have a non-constant cross-section.
Clause 8. The aerospike engine of any of clauses 1 - 7, wherein one or more of the cooling channels have a non-constant surface roughness.
Clause 9. The aerospike engine of any of clauses 1 - 8, wherein a portion of a wall of the external skirt and/or a portion of a wall of the centerbody forming the combustion chamber is unpolished after manufacturing.
Clause 10. The aerospike engine of any of clauses 1 - 9, wherein a single copper alloy is used for manufacturing the external skirt and the centerbody.
Clause 11. The aerospike engine of any of clauses 1 - 10, wherein the centerbody has a truncated cone.
Clause 12. The aerospike engine of any of clauses 1 - 11, wherein the aerospike engine is a linear aerospike engine.
Clause 13. The aerospike engine of any of clauses 1 - 11, wherein the aerospike engine is a toroidal aerospike engine.
Clause 14. The aerospike engine of any of clauses 13, wherein the combustion chamber is a single toroidal combustion chamber.
Clause 15. The aerospike engine of any of clauses 1 - 14, further comprising a channel for ejecting oxygen from a baseplate of the centerbody.
Clause 16. An aerospike engine configured to be connected to a first liquid propellant tank, a second liquid propellant tank, and comprising:
   a centerbody including a truncated aerospike nozzle, a bottom of the truncated aerospike nozzle defining a baseplate,
   an external skirt, and
   a combustion chamber being defined between the external skirt and the centerbody, wherein
   the aerospike engine is configured to supply the first and second liquid propellants propellant from the propellant tanks through the cooling channels to the combustion chamber, wherein
   the aerospike engine is further configured to supply liquid propellant to an exit at the baseplate.
Clause 17. The aerospike engine according to clause 16, wherein the first liquid propellant is liquid methane and the second liquid propellant is liquid oxygen.
Clause 18. The aerospike engine according to clause 17, wherein the liquid oxygen is supplied to an exit at the baseplate.
Clause 19. The aerospike engine according to any of clauses 16 - 18, wherein the cooling channels are internal cooling channels, and wherein the centerbody and/or external skirt are manufactured by additive manufacturing.
Clause 20. The aerospike engine according to any of clauses 16 - 19, wherein the centerbody and/or the external skirt is manufactured from one or more copper alloys.
Clause 21. A reusable stage for a space launch vehicle including an aerospike engine according to any of clauses 1 - 20.
Clause 22. The reusable stage for a space launch vehicle according to clause 21, wherein the aerospike engine is configured for roll and attitude control.
Clause 23. The reusable stage for a space launch vehicle according to clause 21, wherein the aerospike engine is configured for thrusting the space launch vehicle.
Clause 24. The reusable stage for a space launch vehicle according to clause 23,
   having a main body including a first end and a second end, and defining a central longitudinal axis between the first end and the second end, wherein
   the reusable stage rocket engine is arranged at or near the first end of the reusable stage to propel the launch vehicle vertically upwards at take-off, and
   a plurality of electrically powered fans for providing lift during a landing procedure of the stage, wherein the fans have rotational axes arranged substantially perpendicular to a central longitudinal plane, the central longitudinal plane including the central longitudinal axis and passing through a center of the fans.
Clause 25. The reusable stage for a space launch vehicle according to clause 24, wherein the plurality of fans includes a first row of fans arranged side by side and a second row of fans arranged side by side, wherein the first and the second rows are substantially parallel to the central longitudinal axis.
Clause 26. The reusable stage for a space launch vehicle according to clause 25, wherein the main body is cylindrical, and wherein the first row of fans and the second row of fans are arranged in substantially diametrically opposite positions of the main cylindrical body.
Clause 27. The reusable stage for a space launch vehicle according to any of clauses 24 - 26, wherein the reusable stage further comprises one or more batteries for powering the fans.
Clause 28. The reusable stage for a space launch vehicle according to clause 27, wherein the batteries are configured to supply power to the liquid oxygen pump or to the liquid propellant pump.
Clause 29. The reusable stage for a space launch vehicle according to clause 27 or 28, wherein the batteries are arranged at or near a second end of the reusable stage.
Clause 30. A reusable stage for a space launch vehicle according to any of clauses 24 - 29, further comprising one or more fan covers to cover the fans during portions of a flight of the space launch vehicle, and optionally wherein the fan covers are configured to be discarded during flight.
Clause 31. A reusable stage according to any of clauses 23 - 30, wherein the fans are ducted fans and wherein the ducted fans have ducts arranged substantially perpendicular to the central longitudinal axis.
Clause 32. A reusable stage according to any of clauses 23 - 31, wherein the reusable stage is a first stage of a launch vehicle.
Clause 33. A space launch vehicle comprising a first stage according to clause 32 and further comprising a second stage, wherein the second stage comprises a second stage engine for propelling the second stage.
Clause 34. A space launch vehicle according to clause 33, wherein the second stage carries a payload, and wherein the payload optionally is a satellite.
Clause 35. A method for re-entry for a re-usable stage of a launch vehicle comprising an aerospike engine, the aerospike engine having a centerbody including an aerospike nozzle and an external skirt, wherein
   the centerbody comprises cooling channels, and the method comprises:
   providing a flow of liquid propellant through the cooling channels of the centerbody to cool the centerbody during re-entry.
Clause 36. The method of clause 35, wherein the liquid propellant is liquid oxygen.
Clause 37. The method of clause 35 or 36, wherein the liquid propellant is liquid methane.
Clause 38. The method of any of clauses 35 - 37, wherein providing the flow of liquid propellant through the cooling channels includes pumping the liquid propellant through the cooling channels.
Clause 39. The method of any of clauses 35 - 38, wherein one or more batteries power one or more pumps for pumping the liquid propellant.
Clause 40. The method of any of clause 38 or 39, wherein pumping the liquid propellant comprises pumping with a variable flow rate.
Clause 41. The method of any of clauses 35 - 40, wherein the centerbody is made from one or more copper alloys.
Clause 42. The method of clause 41, wherein the centerbody is made by additive manufacturing.
Clause 43. The method of any of clauses 35 - 42, providing a flow of liquid propellant through cooling channels of the external skirt to cool the external skirt during re-entry.
Clause 44. A method for re-entry for a re-usable stage of a launch vehicle comprising an aerospike engine, the method comprising:
   providing a combined flowrate of first and second liquid propellants through cooling channels of the aerospike engine, the combined flowrate of the two liquid propellants having a theoretical thrust level in operation of the aerospike engine; and
   operating the aerospike engine for producing thrust during re-entry, wherein the thrust produced by the aerospike engine is lower than the theoretical thrust level.
Clause 45. The method of clause 44, comprising providing a first flow of the first liquid propellant through cooling channels of the aerospike engine at a first flowrate;
   providing a second flow of the second liquid propellant through other cooling channels of the aerospike engine at a second flowrate.
Clause 46. The method of clause 45, wherein a part of the first flow of the first liquid propellant is not supplied to the combustion chamber after flowing through the cooling channels.
Clause 47. The method of clause 45 or 46, wherein a part of the second flow of the second liquid propellant is not supplied to the combustion chamber after flowing through the cooling channels.
Clause 48. The method of any of clauses 44 - 47, wherein a mixture of the first liquid propellant and the second liquid propellant in the combustion chamber is not optimum.
Clause 49. The method of any of clauses 44 - 48, wherein the first liquid propellant is liquid methane.
Clause 50. The method of any of clauses 44 - 49, wherein the second liquid propellant is liquid oxygen.
Clause 51. The method of any of clauses 44 - 47, wherein the aerospike engine comprises a centerbody including an aerospike nozzle and an external skirt, wherein
   the centerbody comprises centerbody cooling channels, and the external skirt comprises skirt cooling channels.
Clause 52. The method of clause 51, wherein the first flow of a first liquid propellant is provided through the skirt cooling channels, and the second flow of the second liquid propellant is provided through the centerbody cooling channels.
Clause 53. The method of clause 52, wherein the first liquid propellant is liquid methane and the second liquid propellant is liquid oxygen.
Clause 54. The method of any of clauses 44 - 53, wherein the re-entry is a tail first re-entry.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. An aerospike engine configured to be connected to a liquid methane tank, and to a liquid oxygen tank, the aerospike engine comprising:
a centerbody including an aerospike nozzle,
an external skirt, and
a combustion chamber being defined between the external skirt and the centerbody, wherein
the centerbody is additively manufactured from one or more copper alloys and has a plurality of centerbody internal cooling channels,
the external skirt is additively manufactured from one or more copper alloys and has a plurality of skirt internal cooling channels, wherein
the aerospike engine is configured to supply liquid methane delivered from the liquid methane tank and liquid oxygen delivered from the liquid oxygen tank through the internal cooling channels to the combustion chamber.

2. The aerospike engine of claim 1, comprising an injector plate having a plurality of injection tubes including methane injection tubes and oxygen injection tubes, wherein the injection tubes are configured such that injected methane and injected oxygen impinge against each other.

3. The aerospike engine of claim 2, wherein the injector plate is integrally formed with the centerbody.

4. The aerospike engine of any of claims 1 - 3, further comprising a liquid methane pump operatively coupled with an expansion turbine configured for expansion of heated up methane.

5. The aerospike engine of any of claims 1 - 4, further comprising a liquid oxygen pump operatively coupled with an expansion turbine configured for expansion of heated up oxygen.

6. The aerospike engine according to any of claims 1 - 5, wherein one of the liquid methane and liquid oxygen is used for cooling the centerbody, and the other of the liquid methane and liquid oxygen is used for cooling the external skirt.

7. The aerospike engine of any of claims 1 - 6, wherein a portion of a wall of the external skirt and/or a portion of a wall of the centerbody forming the combustion chamber is unpolished after manufacturing.

8. The aerospike engine of any of claims 1 - 7, wherein a single copper alloy is used for manufacturing the external skirt and the centerbody.

9. The aerospike engine of any of claims 1 - 8, wherein the centerbody has a truncated cone.

10. The aerospike engine of any of claims 1 - 9, wherein the aerospike engine is a toroidal aerospike engine, and optionally wherein the combustion chamber is a single toroidal combustion chamber.

11. The aerospike engine of any of claims 1 - 10, further comprising a channel for ejecting oxygen from a baseplate of the centerbody.

12. A reusable stage for a space launch vehicle including an aerospike engine according to any of claims 1 - 11.

13. A space launch vehicle comprising a first stage according to claim 12 and further comprising a second stage, wherein the second stage comprises a second stage engine for propelling the second stage, and optionally wherein the second stage carries a payload.

14. A method for re-entry for a re-usable stage of a launch vehicle comprising an aerospike engine, the aerospike engine having a centerbody including an aerospike nozzle and an external skirt, wherein
the centerbody comprises cooling channels, and the method comprises:
providing a flow of liquid propellant through the cooling channels of the centerbody to cool the centerbody during re-entry.

15. The method of claim 14, wherein the aerospike engine is the aerospike engine of any of claims 1 - 11.
